# EUROPÄISCHE PATENTSCHRIFT

(11) **EP 0 626 345 B1**
(45) Veröffentlichungstag und Bekanntmachung des Hinweises auf die Patenterteilung: **11.06.1997**
(21) Anmeldenummer: 94810291.8
(22) Anmeldetag: 20.05.1994
(51) Int. Cl.: C02F 1/14

(54) **Vorrichtung zum Entsalzen von Meerwasser**
Apparatus for sea-water desalination
Dispositif pour la désalination de l'eau de mer

(30) Priorität: 27.05.1993 CH 1589/93
(43) Veröffentlichungstag der Anmeldung: 30.11.1994
(73) Patentinhaber: Kaufmann, Willy, E-07830 San José, Ibiza, Baleares (ES)
(72) Erfinder: Kaufmann, Willy, E-07830 San José, Ibiza, Baleares (ES)
(74) Vertreter: Groner, Manfred

(56) Entgegenhaltungen:
- WO-A-91/04228
- FR-A- 2 583 738
- US-A- 4 003 365

## Beschreibung

Die Erfindung betrifft eine Vorrichtung zum Entsalzen von Meerwasser nach dem Oberbegriff des Anspruchs 1.

Eine Vorrichtung dieser Gattung ist aus der FR-A-2,583,738 bekannt. Bei dieser wird das zu entsalzende Wasser einem Gewebe zugeleitet, das an der Unterseite einer geneigt angeordneten Platte angebracht ist. Das im Gewebe nach unten fliessende Wasser verdampft und wird an einem parallel zur Platte angeordneten Kondensator kondensiert. Bei dieser Vorrichtung besteht die Schwierigkeit, dass das Gewebe sehr schnell durch ausfallendes Salz verkrustet und unwirksam wird.

Weiter ist aus der DE-C-38 29 725 eine Vorrichtung bekannt, die in einem Behälter ein Element mit einer oberen, geneigt angeordneten Verdampfungsfläche aufweist. Zur Vergrösserung der Oberfläche ist auf diese Verdampfungsfläche ein Flies aufgelegt. Das zu entsalzende Meerwasser wird von oben über diese Verdampfungsfläche geleitet. Das an der Verdampfungsfläche verdampfte Wasser wird in einem hinteren Flächenelement, das als Kondensator ausgebildet ist, kondensiert. Diese bekannte Vorrichtung arbeitet nach dem Prinzip einer Destillationsapparatur, wobei die für die Verdunstung des Wassers benötigte Wärmeenerige der Sonnenstrahlung entnommen wird. Beim Destillieren von Meerwasser in einer solchen Anlage besteht nun das besondere Problem, dass die Verdampfungsfläche sehr schnell verunreinigt und insbesondere durch Salzablagerung verkrustet wird. Eine solche verunreinigte und verkrustete Verdampfungsfläche verhindert nun wesentlich das Aufwärmen des Elementes und verhindert zudem ein schnelles Verdunsten des Wassers. Bei der bekannten Vorrichtung sinkt somit die Leistung mit zunehmender Verkrustung und Verunreinigung der Verdampfungsfläche.

Der Erfindung liegt somit die Aufgabe zugrunde, eine Vorrichtung der genannten Gattung zu schaffen, bei welcher die genannten Nachteile vermieden sind und die somit wesentlich leistungsfähiger ist. Die Aufgabe ist bei einer gattungsgemässen Vorrichtung gemäss Kennzeichen des Anspruchs 1 gelöst. Bei der erfindungsgemässen Vorrichtung wird das Meerwasser somit gegen die Unterseite des Elementes geleitet. Das Meerwasser verdunstet somit an der Unterseite des Elementes, an der sich Salz und Verunreinigungen ablagern können. Da nun das Meerwasser gegen diese Unterseite gespült wird, ist es auch möglich, mit dem Meerwasser solche Ablagerungen wegzuspülen. Wesentlich ist nun, dass die Oberseite des Elementes nicht verunreinigt oder verkrustet wird und somit immer im gleichen Mass Sonneneinstrahlung aufnehmen kann. Damit ist gewährleistet, dass das Element ohne wesentlichen Verlust durch die Sonnenstrahlung aufheizbar ist. Es hat sich gezeigt, dass durch das Wegführen des verdunsteten Wassers an einem im oberen Bereich des Verdunstungsraumes angeordneten Ausgang und die Kondensation in einem separaten nachgeschalteten Raum die Leistung erhöht werden kann und gleichzeitig die Bildung eines Dampfniederschlags vor dem Kondensator vermindert wird.

Nach der Erfindung wird das Meerwasser feinverteilt gegen die Verdampfungsfläche gespritzt oder gesprüht. Dadurch kann sichergestellt werden, dass das Meerwasser als vergleichsweise dünner Film auf die Verdampfungsfläche aufgetragen wird. Vorzugsweise erstreckt sich dieser dünne Wasserfilm über die gesamte Verdampfungsfläche. Ist nun das Element als Platte ausgebildet, welche den Innenraum des Behälters auf der Seite der Sonneneinstrahlung im wesentlichen dampfdicht abschliesst, so ist gewährleistet, dass auf der Seite der Sonneneinstrahlung im Behälter sich der durch die Verdampfung entstandene Dampf nicht niederschlagen und kondensieren kann. Ein solcher Dampfniederschlag würde die Sonneneinstrahlung mindern und damit die Leistung der Vorrichtung herabsetzen. Auf der Seite der Sonneneinstrahlung können damit Abdeckgläser verwendet werden, die innenseitig durch Dampf nicht beschlagen werden und somit immer für das Sonnenlicht voll durchlässig sind.

Eine Verkrustung und Verunreinigung der Verdampfungsfläche wird dann besonders wirksam vermieden, wenn das Meerwasser mit Druck und während längerer Zeitdauer, beispielsweise während 40 bis 120 Sekunden, vorzugsweise 1 bis 2 Minuten gegen die Verdampfungsfläche gespritzt wird. Dadurch kühlt das Element ab und die Salzkruste wird sauber weggespült. Dieser Reinigungsvorgang kann beispielsweise 30 bis 90 Minuten, vorzugsweise alle 60 Minuten durchgeführt werden.

Vorzugsweise wird das Meerwasser mit einem Druck von beispielsweise 1 bis 3 atü gegen die Verdampfungsfläche gespritzt. Die Dauer während der das Wasser aufgespritzt wird, ist vorzugsweise vergleichsweise kurz, beispielsweise wenige Sekunden. Das Aufspritzen des Meerwassers wird nach einer Pause von beispielsweise 1 bis 2 Minuten wiederholt. Dies hat den wesentlichen Vorteil, dass das Element nach jedem Aufspritzen von Meerwasser wieder auf eine wesentlich erhöhte Temperatur aufgeheizt wird.

Das Element ist gemäss einer Weiterbildung der Erfindung so ausgebildet, dass dieses vergleichsweise viel Wärme speichern kann. Das Element ist beispielsweise eine vergleichsdicke Platte aus Metall, beispielsweise Aluminium oder eine geeignete Legierung davon.

Die Vorrichtung wird vorzugsweise von Hand oder mit einem motorischen Antrieb der Sonnenlaufbahn nachgeführt.

Das mit der erfindungsgemässen Vorrichtung entsalzte Wasser eignet sich insbesondere für die Süsswasserversorgung und insbesondere zum Bewässern von Grünanlagen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Fig. 1 schematisch und teilweise geschnitten eine erfindungsgemässe Vorrichtung,
Fig. 2 ein Querschnitt entlang der Linie II-II der Fig. 1,
Fig. 3 ein Längsschnitt entlang der Linie III-III der Fig. 2, und
Fig. 4 schematisch eine Teilansicht der Unterseite der Vorrichtung gemäss Fig. 1.

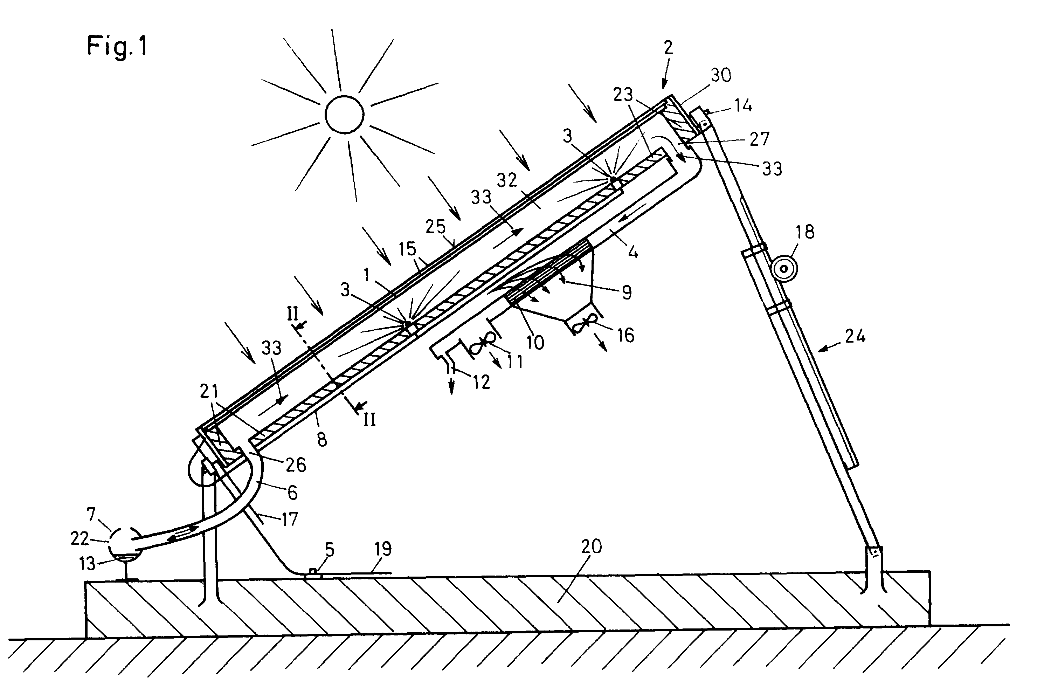

Wie die Fig. 1 zeigt, weist die Vorrichtung einen kastenförmigen Behälter 2 auf, der in geneigter Lage mittels eines Gestells 24 auf einem Fundament 20 abgestützt ist. Gestellvorrichtungen 14 und 18 ermöglichen eine Neigungs- und Höhenverstellung um dadurch die Behälter 2 der Sonne nachzuführen. Durch eine tägliche und monatliche Neigungs- und Höhenverstellung kann der Behälter 2 dadurch so ausgerichtet werden, dass eine ebene Oberseite 25 senkrecht zur Sonneneinstrahlung ausgerichtet ist. Solche Verstelleinrichtungen sind bei Sonnenkollektoren an sich bekannt und brauchen hier deshalb nicht näher erläutert zu werden.

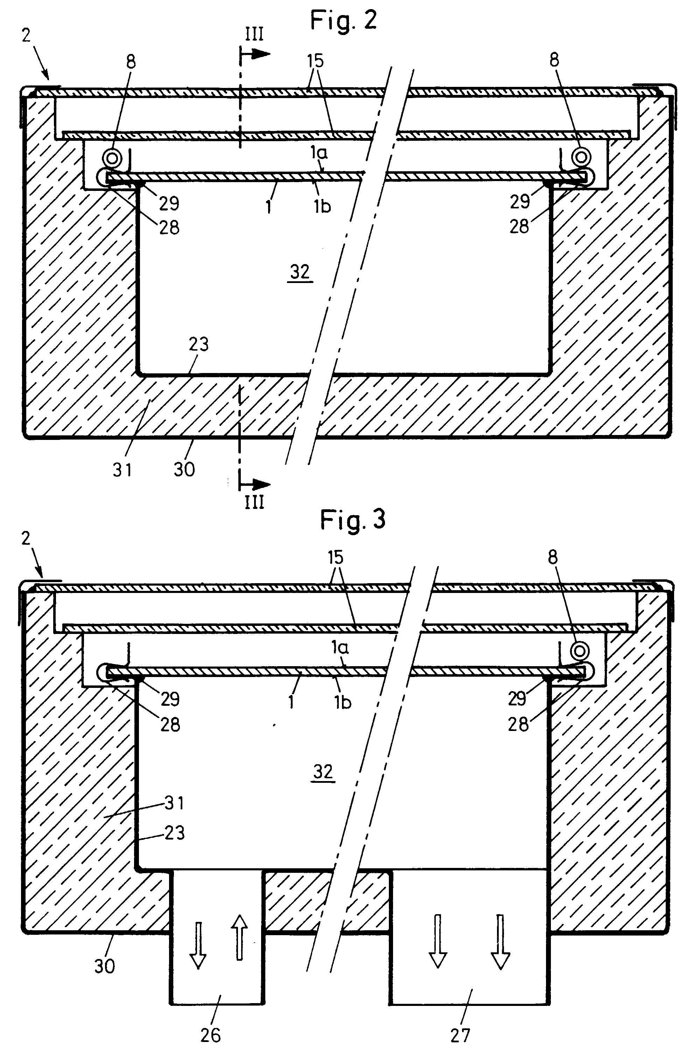

Der Behälter 2 weist ein Gehäuse 23, beispielsweise aus Blech auf, das eine oder mehrere Oeffnungen 26 für das Abwasser sowie einen Ausgang 27 für verdampftes Wasser besitzt. Das Gehäuse 23 ist oberseitig mit einem Element 1, das vorzugsweise eine ebene Platte aus Aluminium ist, dicht verschlossen. Wie die Figuren 2 und 3 zeigen, ist zu diesem dichten Verschliessen eine umlaufende Klemmleiste 28 vorgesehen. Mit einer ebenfalls umlaufenden Dichtungsmasse 29 kann die Verbindung zwischen dem Gehäuse 23 und dem Element 1 absolut dampfdicht gestaltet werden. Ueber dem Element 1 sind zwei Abdeckgläser 15 angeordnet, die mit einem äusseren Gehäuse 30 verbunden sind. Zwischen den beiden Gehäusen 23 und 30 ist eine Wärmeisolation 31 angeordnet, welche die Rückseite sowie die Seitenwände des Behälters 2 nach aussen isolieren. Die Wärmeisolation 31 ist somit im Abstand zum Element 1 auf der Gegenseite der Sonneneinstrahlung angeordnet. Die Warmeisolation 31 verhindert insbesondere, dass das Element 1 sowie ein Innenraum 32 an die Aussenseite des Behälters 2 Wärme abgeben.

Das Element 1 weist gemäss den Figuren 2 und 3 eine ebene Oberfläche 1a sowie eine ebene untere Verdampfungsfläche 1b auf. Die Fläche 1a ist so ausgebildet, dass diese durch die Abdeckgläser 15 hindurch möglichst vollständig Sonneneinstrahlung aufnimmt. Auf die Fläche 1a ist vorzugsweise eine hier nicht gezeigte Selektiv-Beschichtung aufgebracht, die an sich bekannt ist und gewährleistet, dass nur sehr wenig auftreffende Sonnenstrahlung reflektiert wird. Die Unterseite 1b ist ebenfalls vorzugsweise eben und so ausgebildet, dass aufgespritztes Meerwasser sich an dieser filmartig verteilt. Das Element 1 ist vorzugsweise eine Platte mit einer Stärke von beispielsweise 3 bis 5 mm. Vorzugsweise ist das Element aus einem Werkstoff hergestellt, der eine hohe Wärmeleitfähigkeit aufweist, beispielsweise aus Aluminium.

Unterhalb des Elementes 1 sind zwei Düsen 3 angeordnet die einen Eingang für das zu entsalzende Meerwasser bilden und mit denen das Meerwasser gegen die Fläche 1b gesprüht oder gespritzt werden kann. Wie die Fig. 1 zeigt, sind die Düsen 3 über eine Düsenzuleitung 8 mit einem Magnetventil 5 und dieses mit einer Meerwasserzuleitung 19 verbunden. Diese Zuleitung 19 ist mit einer hier nicht gezeigten Pumpe verbunden, mit der beispielsweise direkt aus dem Meer Wasser entnommen werden kann. Die Düsenzuleitung 8 ist beispielsweise ein flexibler Schlauch, der nach dem Magnetventil 5 gemäss den Figuren 2 und 3 zwischen den Abdeckgläsern 15 und dem Element 1 am Rand des Behälters 2 entlang geführt und hier vorgeheizt wird und schliesslich mit den Düsen 3 verbunden ist. Das die Düsen 3 verlassende in der Leitung 8 vorgeheizte Wasser weist einen Druck von beispielsweise 1 bis 3 atü auf und wird durch die Düsen 3 derart fein verteilt, dass im wesentlichen die gesamte Fläche 1b besprüht wird. Das an der Fläche 1b aufgesprühte Wasser bildet dadurch sofort einen vergleichsweise dünnen Wasserfilm. Ist nun das Element 1 durch Sonneneinstrahlung erwärmt, beispielsweise auf 70 bis 130°C, so verdunstet ein solcher Wasserfilm sehr schnell, wobei zurückbleibendes Salz und andere Stoffe sich an der Fläche 1b ablagern. Das verdunstete Wasser gelangt in Richtung der Pfeile 33 infolge des thermischen Auftriebs im Innenraum 32 nach oben zum Ausgang 27, der sich als breiter Spalt über die gesamte Breite des Behälters 2 erstrecken kann. Zur Verstärkung dieser Bewegung des Dampfes kann ein Ventilator 11 vorgesehen sein, der am Ende eines Dampf-Sammeltrichters 4 angeordnet ist, und der durch Oeffnungen 22 eines Abwasser-Sammelrohres 7 Aussenluft ansaugt. Diese Luft gelangt durch einen Schlauch 6 zum Eingang 26 und schliesslich in den Innenraum 32.

Das verdampfte Wasser gelangt vom Ausgang 27 in den Sammeltrichter 4 und wird in einem Kondensator 10 in die flüssige Phase übergeführt. Schliesslich verlässt das kondensierte Wasser den Sammeltrichter 4 diesen durch eine Oeffnung 12, der mit einer Leitung verbunden sein kann. Um die Kühlwirkung des Kondensators 10 zu verbessern, kann ein Ventilator 16 vorgesehen sein, der in Richtung des Pfeiles 9 Kühlluft durch den Kondensator 10 saugt. Kondensatoren dieser Art sind allgemein bekannt und brauchen hier nicht näher erläutert zu werden.

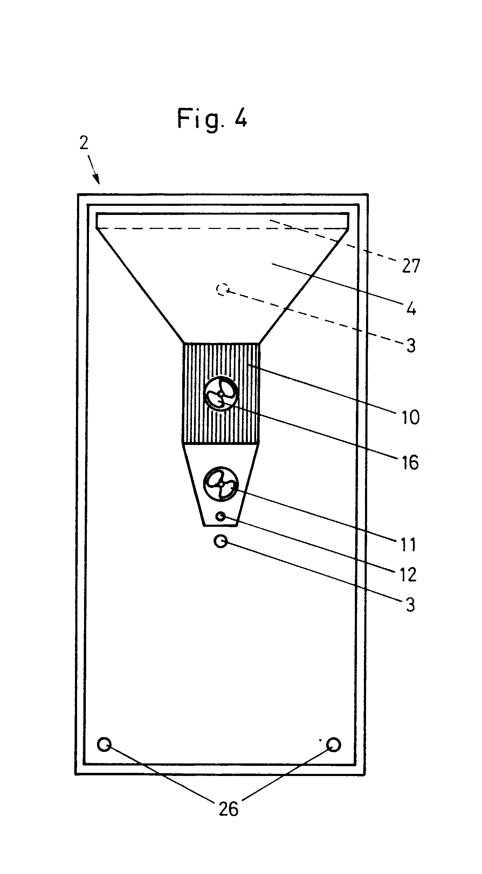

Wie Fig. 4 zeigt, ist der Sammeltrichter 4 konisch ausgebildet, derart, dass in diesem bereits kondensiertes Wasser bei jeder Lage des Behälters 2 ungehindert zum Kondensator 10 fliessen kann.

Das Magnetventil 5 ist mit einer hier nicht gezeigten Zeitsteuerung verbunden, die das Ventil 5 in vorbestimmten Zeitintervallen von 1 bis 6 Sekunden für wenige Sekunden, beispielsweise 2 bis 4 Sekunden, vorzugsweise ca. 3 Sekunden öffnet. Zudem wird das Magnetventil 5 vorzugsweise nach einer längeren Zeitperiode von beispielsweise 1 Stunde wesentlich länger beispielsweise während 60 bis 90 Sekunden geöffnet. Das Element 1 wird nach jedem Aufspritzen durch die Sonneneinstrahlung auf die erforderliche Temperatur erhitzt. Bei jedem stündlichen längeren Aufspritzen wird das Element 1 stark abgekühlt und eine Verkrustung durch das unter Druck auftreffende Meerwasser gelöst. Ein grosser Teil des aufgespritzten Meerwassers, beispielsweise ca. 80% läuft an der Fläche 1b nach unten und gelangt durch den Schlauch 6 in das Sammelrohr 7. Das Sammelrohr 7 ist bezüglich des Abwassers 13 überdimensioniert und kann wie bereits oben erwähnt auch für die Zuführung von Aussenluft durch die Oeffnungen 22 dienen.

Das Element 1 trennt somit den zeitweise mit Wasserdampf gefüllten Innenraum 32 von den Abdeckgläsern 15. Dies ist wesentlich, da dadurch verhindert wird, dass die Abdeckgläser 15 innenseitig mit Dampf beschlagen werden. Zudem wird eine Verunreinigung der Oberfläche 1a des Elementes 1 vermieden. Damit ist gewährleistet, dass das Element 1 durch die Sonneneinstrahlung immer sehr schnell wieder aufgeheizt wird und entsprechend viel Wärme aufnehmen kann.

Das durch die erfindungsgemässe Vorrichtung gewonnene Wasser ist Süsswasser, das beispielsweise zum Bewässern verwendet werden kann. Versuche haben gezeigt, dass bei üblicher Sonneneinstrahlung pro Quadratmeter Kollektorfläche 3 bis 5 Liter Süsswasser in einer Stunde gewonnen werden können. Für die elektrische Versorgung der Pumpe, der elektrischen Steuerung sowie der Ventilatoren werden pro Stunde lediglich 50 bis 80 Watt benötigt. Für grosse Anlagen empfiehlt es sich, jeweils beispielsweise zehn bis zwölf Kollektoren in einer Gruppe anzuordnen. Diese Kollektoren können dann einzeln der Sonne nachgeführt werden. Bereits mit einer einfachen Linearantrieb kann eine in der Regel hinreichende Leistung erreicht werden. Solche Anlagen können sehr einfach erweitert werden auf eine im wesentlich unbeschränkte Anzahl von Kollektoren.

Trotz der erheblichen Vorteile der erfindungsgemässen Vorrichtung ist diese wie ersichtlich mit verhältnismässig wenigen, einfachen und robusten Bauteilen realisiert, so dass erfindungsgemäss eine Vorrichtung geschaffen wurde, welche nicht nur den Anforderungen an eine Wasserentsalzungsanlage in hervorragender Weise Rechnung trägt, sondern aufgrund ihrer einfachen und robusten Ausführbarkeit kostenmässig günstig und betrieblich äusserst zuverlässig ist.

## Patentansprüche

1. Vorrichtung zum Entsalzen von Meerwasser, mit einem kastenförmigen Behälter (2), in dem ein durch Sonnenstrahlung aufheizbares Element (1) angeordnet ist und der einen Eingang für das zu entsalzende Meerwasser und einen Ausgang (27) für das am Element (1) verdampfte oder verdunstete Wasser sowie einen mit dem Ausgang (27) verbundenen Kondensator (10) aufweist, wobei das Element (1) eine untere, bezüglich der Erdoberfläche geneigt angeordnete Verdampfungsfläche (1b) aufweist und Mittel (3) vorgesehen sind, mit denen die Verdampfungsfläche (b) mit dem zu entsalzenden Meerwasser bespülbar ist, dadurch gekennzeichnet, dass der Ausgang (27) für das verdunstete Wasser in einem oberen Bereich des Behälters (2) angeordnet ist, dass das verdunstete Wasser durch diesen Ausgang (27) aus dem Verdampfungsbereich entfernbar und dem nachgeschalteten Kondensator zuleitbar ist und dass die genannten Mittel (3) wenigstens eine Düse aufweisen, mit welcher das Meerwasser beim Betrieb der Vorrichtung mit Unterbrüchen feinverteilt gegen die Verdampfungsfläche (1b) spritzbar oder sprühbar ist, wodurch das Element (1) in zeitlichen Abständen abgekühlt und eine gebildete Salzkruste weggespült und während den Unterbrüchen das Element (1) aufgeheizt werden kann.

2. Vorrichtung nach Anspruch 1, dadurch gekennzeichnet, dass das Element (1) eine Platte ist, die einen Innenraum (32) des Behälters (2) auf der Seite der Sonneneinstrahlung dampfdicht abschliesst.

3. Vorrichtung nach Anspruch 1 oder 2, dadurch gekennzeichnet, dass im Behälter (2) im Abstand zum Element (1) auf der Gegenseite der Sonneneinstrahlung eine Wärmeisolation (31) angeordnet ist.

4. Vorrichtung nach einem der Ansprüche 1 bis 3, dadurch gekennzeichnet, dass der Behälter (2) auf der Seite der Sonneneinstrahlung Abdeckgläser (15) aufweist, welche für die Sonneneinstrahlung durchlässig sind.

5. Vorrichtung nach Anspruch 4, dadurch gekennzeichnet, dass unterhalb der Abdeckgläser (15) wenigstens bereichsweise eine Leitung (8) für die Zuleitung von Meerwasser zu den genannten Mitteln (3) verläuft.

6. Vorrichtung nach einem der Ansprüche 1 bis 5, dadurch gekennzeichnet, dass in einer Zuleitung (8) für das Meerwasser ein Ventil (5) angeordnet ist, das mittels einer Zeitsteuerung so gesteuert ist, dass das zu entsalzende Meerwasser in vorbestimmten Abständen vergleichsweise kurzseitig, beispielsweise einige Sekunden gegen das Element (1) leitbar ist.

7. Vorrichtung nach Anspruch 6, dadurch gekennzeichnet, dass das Ventil (5) zum Reinigen des Elementes (1) durch das aufgespritzte Meerwasser abgekühlt und eine anhaftende Salzkruste gelöst und weggespült werden kann.

8. Vorrichtung nach Anspruch 7, dadurch gekennzeichnet, dass das Ventil (5) zum Reinigen des Elementes (1) alle 30 bis 90 Minuten für etwa 40 bis 120 Sekunden geöffnet werden kann.

9. Vorrichtung nach einem der Ansprüche 1 bis 8, dadurch gekennzeichnet, dass das Meerwasser in vorbestimmten Abständen 1 bis 6 Sekunden, vorzugsweise etwa 2 bis 4 Sekunden gegen das Element (1) Sprühbar ist.

10. Vorrichtung nach Anspruch 9, dadurch gekennzeichnet, dass der vorbestimmte zeitlich Abstand etwa 60 bis 90 Sekunden betragen kann.

11. Vorrichtung nach einem der Ansprüche 1 bis 10, dadurch gekennzeichnet, dass der Behälter (2) Mittel (14) aufweist, mit denen der Behälter (2) der Sonne nachführbar ist.

12. Vorrichtung nach einem der Ansprüche 1 bis 11, dadurch gekennzeichnet, dass an dem Behälter (2) in einem unteren Bereich ein Sammelrohr (7) für das Abwasser angeschlossen ist.

13. Vorrichtung nach einem der Ansprüche 1 bis 12, dadurch gekennzeichnet, dass der Ausgang (27) des Behälters mit einer Saugvorrichtung, beispielsweise einem Ventilator (11) verbunden ist, und dass in einem unteren Bereich des Behälters (2) Oeffnungen (22) angeordnet sind, durch welche Aussenluft ansaugbar ist.

14. Vorrichtung nach Anspruch 13, dadurch gekennzeichnet, dass die Oeffnungen (22) an einem überdimensionalen Sammelrohr (7) angebracht sind.

15. Vorrichtung nach einem der Ansprüche 1 bis 14 dadurch gekennzeichnet, dass das Element (1) eine Aluminiumplatte mit einer Stärke von 3 bis 5 mm ist.

16. Vorrichtung nach einem der Ansprüche 1 bis 15, dadurch gekennzeichnet, dass das Element (1) beispielsweise mit einer umlaufenden Klemmleiste (28) dampfdicht mit einem beispielsweise aus Aluminiumblech hergestellten Gehäuse (23) verbunden ist.

## Claims

1. Apparatus for the desalination of sea water, having a box-shaped container (2) in which an element (1) which can be heated by solar radiation is arranged and which possesses an inlet for the sea water to be desalinated and an outlet (27) for the water evaporated or vaporized at the element (1) and also a condenser (10) connected to the outlet (27), the element (1) possessing a lower evaporation surface (1b) which is arranged at an incline with respect to the earth's surface and means (3) being provided by which the evaporation surface (b) can be rinsed with the sea water to be desalinated, characterized in that the outlet (27) for the vaporized water is arranged in an upper area of the container (2), in that the vaporized water can be removed from the evaporation area through this outlet (27) and can be fed to the downstream condenser and in that the said means (3) possess at least one nozzle by which the sea water, when the apparatus is operated, can be sprayed or sprinkled with interruptions in a finely divided manner against the evaporation surface (1b), as a result of which the element (1) can, at intervals, be cooled and a salt crust which is formed can be rinsed away and during the interruptions the element (1) can be heated.

2. Apparatus according to Claim 1, characterized in that the element (1) is a plate which, on the solar irradiation side, closes off vapour-tightly an interior space (32) of the container (2).

3. Apparatus according to Claim 1 or 2, characterized in that heat insulation (31) is arranged in the container (2) at a distance to the element (1) on the opposite side to the solar irradiation.

4. Apparatus according to one of Claims 1 to 3, characterized in that the container (2) possesses, on the solar irradiation side, glass covers (15) which are transparent to the solar irradiation.

5. Apparatus according to Claim 4, characterized in that, below the glass covers (15), there runs, in at least part of the area, a pipe (8) for feeding sea water to the said means (3).

6. Apparatus according to one of Claims 1 to 5, characterized in that a valve (5) is arranged in a feed line (8) for the sea water, which valve is controlled by a time controller in such a manner that the sea water to be desalinated can be conducted against the element (1) at predetermined intervals for comparatively short periods, for example a few seconds.

7. Apparatus according to Claim 6, characterized in that the valve (5), to clean the element (1) by the sprayed-on sea water, can be cooled and an adhering salt crust can be dissolved and rinsed away.

8. Apparatus according to Claim 7, characterized in that the valve (5), to clean the element (1), can be opened every 30 to 90 minutes for about 40 to 120 seconds.

9. Apparatus according to one of Claims 1 to 8, characterized in that the sea water can be sprinkled against the element (1) at predetermined intervals for 1 to 6 seconds, preferably for about 2 to 4 seconds.

10. Apparatus according to Claim 9, characterized in that the predetermined time interval can be about 60 to 90 seconds.

11. Apparatus according to one of Claims 1 to 10, characterized in that the container (2) possesses means (14) by which the container (2) can track the sun.

12. Apparatus according to one of Claims 1 to 11, characterized in that a collection tube (7) for the waste water is connected to the container (2) in a lower area.

13. Apparatus according to one of Claims 1 to 12, characterized in that the outlet (27) of the container is connected to a suction apparatus, for example a fan (11), and in that openings (22) through which external air can be drawn in are arranged in a lower area of the container (2).

14. Apparatus according to Claim 13, characterized in that the openings (22) are provided in an oversized collection tube (7).

15. Apparatus according to one of Claims 1 to 14, characterized in that the element (1) is an aluminium plate having a thickness of 3 to 5 mm.

16. Apparatus according to one of Claims 1 to 15, characterized in that the element (1) having, for example, a surrounding clamping strip (28) is attached vapour-tightly to a housing (23) made, for example, of aluminium sheet.

## Revendications

1. Dispositif de désalination de l'eau de mer, comportant un réservoir (2) en forme de bac dans lequel un élément (1) pouvant être chauffé par l'ensoleillement est disposé et qui présente une entrée pour l'eau de mer à dessaler et une sortie (27) pour l'eau évaporée ou volatilisée sur l'élément (1) ainsi qu'un condenseur (10) relié à la sortie (27), l'élément (1) présentant une surface d'évaporation (1b) inférieure, inclinée par rapport à la surface du sol et des moyens (3) grâce auxquels la surface d'évaporation (1b) peut être arrosée par l'eau de mer à dessaler, étant prévus, caractérisé en ce que la sortie (27) pour l'eau évaporée est disposée dans une zone supérieure du réservoir (2) de telle sorte que l'eau évaporée peut être éliminée de la zone d'évaporation par cette sortie (27) et peut être amenée vers le condenseur placé après et en ce que les moyens cités (3) présentent au moins une tuyère par laquelle lors du fonctionnement du dispositif avec des interruptions, l'eau de mer peut être projetée ou vaporisée contre la surface d'évaporation (1b), de manière finement dispersée, ce qui permet de pouvoir refroidir l'élément (1) à intervalles, faire disparaître par rinçage une croûte de sel formée et chauffer l'élément (1) pendant les interruptions.

2. Dispositif selon la revendication 1, caractérisé en ce que l'élément (1) est une plaque qui ferme de manière étanche à la vapeur, un espace intérieur (32) du réservoir (2) du côté de l'ensoleillement.

3. Dispositif selon la revendication 1 ou la revendication 2, caractérisé en ce que, une isolation thermique (31) est disposée dans le réservoir (2) à distance de l'élément (1), du côté opposé de l'ensoleillement.

4. Dispositif selon l'une quelconque des revendications 1 à 3, caractérisé en ce que le réservoir (2) présente du côté de l'ensoleillement, des couvercles en verre (15) qui sont transparents pour l'ensoleillement.

5. Dispositif selon la revendication 4, caractérisé en ce que, au-dessous des couvercles en verre (15), au moins par endroit, une conduite (8) passe pour amener l'eau de mer vers les moyens cités (3).

6. Dispositif selon l'une quelconque des revendications 1 à 5, caractérisé en ce que dans une conduite (8) pour l'eau de mer est disposée une vanne (5) commandée à l'aide d'un réglage de la temporisation de telle sorte que l'eau de mer à dessaler peut être amenée contre l'élément (1) à intervalles prédéfinis, assez rapidement, par exemple quelques secondes.

7. Dispositif selon la revendication 6, caractérisé en ce que la vanne (5) pour le nettoyage de l'élément (1) est refroidie par l'eau de mer projetée, et en ce qu'une croûte de sel adhérant peut se détacher et être éliminée par rinçage.

8. Dispositif selon la revendication 7, caractérisé en ce que la vanne (5) pour le nettoyage de l'élément (1) peut être ouverte toutes les 30 à 90 minutes pendant environ 40 à 120 secondes.

9. Dispositif selon l'une quelconque des revendications 1 à 8, caractérisé en ce que l'eau de mer peut être vaporisée contre l'élément (1) à intervalles prédéfinis de 1 à 6 secondes, de préférence d'environ 2 à 4 secondes.

10. Dispositif selon la revendication 9, caractérisé en ce que l'intervalle prédéfini peut se situer entre 60 et 90 secondes environ.

11. Dispositif selon l'une quelconque des revendications 1 à 10, caractérisé en ce que le réservoir (2) présente des moyens (14) grâce auxquels le réservoir (2) peut suivre le soleil.

12. Dispositif selon l'une quelconque des revendications 1 à 11, caractérisé en ce qu'un tuyau collecteur (7) pour les eaux résiduaires est relié au réservoir (2) dans une zone inférieure.

13. Dispositif selon l'une quelconque des revendications 1 à 12, caractérisé en ce que la sortie (27) du réservoir est assemblée avec un dispositif d'aspiration, par exemple un ventilateur (11) et en ce que dans une zone inférieure du réservoir (2) sont disposées des ouvertures (22) par lesquelles l'air extérieur peut être aspiré.

14. Dispositif selon la revendication 13, caractérisé en ce que les ouvertures (22) sont placées sur un tuyau collecteur (7) surdimensionné.

15. Dispositif selon l'une quelconque des revendications 1 à 14, caractérisé en ce que l'élément (1) est une plaque en aluminium d'une épaisseur de 3 à 5 mm.

16. Dispositif selon l'une quelconque des revendications 1 à 15, caractérisé en ce que l'élément (1) est assemblé de manière étanche, par exemple par une barre de serrage (28) sur le pourtour, avec un boîtier (23) réalisé par exemple en tôle d'aluminium.
